# EUROPEAN PATENT APPLICATION

(11) **EP 4 847 241 A1**
(43) Date of publication of application: **02.12.2026**
(21) Application number: 25745136.9
(22) Date of filing: 22.01.2025
(51) Int. Cl.: B29C 70/46

(54) **FIBER-REINFORCED RESIN ARTICLE AND PRODUCTION METHOD FOR SAME AND FUSIBLE CORE AND PRODUCTION METHOD FOR SAME**

(30) Priority: 22.01.2024 JP 2024007530
(71) Applicant: Mitsubishi Chemical Corporation, Tokyo 100-8251 (JP)
(72) Inventor: TAKANO, Tsuneo, Tokyo 100-8251 (JP)
(74) Representative: Hoffmann Eitle
(86) International application number: PCT/JP2025/001827
(87) International publication number: WO 2025/159095

(57) **Abstract**

The present invention relates to a method for producing a fiber-reinforced resin article having a substantially closed cavity, the method including: placing a reinforcing fiber preform in a mold together with a core formed of a wax and heating the reinforcing fiber preform to cure the preform, and a primary object thereof is to provide a beneficial improvement therein. A method for producing a fiber-reinforced resin article of the present invention includes: a molding step of placing a reinforcing fiber preform in a mold together with a fusible core formed of wax and heating the reinforcing fiber preform in the mold to obtain a cured product of the reinforcing fiber preform; and a core removal step of removing the fusible core from the cured product. The fusible core is formed of at least two types of waxes miscible with each other, and a difference in melting point between a wax having a highest melting point and a wax having a lowest melting point is 30°C or higher.

## Description

### Technical Field

The present invention relates to a fiber-reinforced resin article and a method for producing the same, and a fusible core and a method for producing the same.

The present application claims priority based on JP 2024-7530 filed with the Japan Patent Office on January 22, 2024, the content of which is incorporated herein by reference.

### Background Art

Fiber-reinforced resins (FRPs) are used in a variety of applications including reinforcing members for automobiles. As a method for molding an FRP article having a hollow portion or a U-shaped portion in cross section, a method (fusible core molding) has been proposed in which a prepreg preform is placed in a mold together with a core formed of a wax, at least a part of the core is melted and expanded in the mold to cure the prepreg preform under pressure, and then the core is removed (Patent Document 1).

### Citation List

### Patent Document

Patent Document 1: WO 2018/079824

### Summary of Invention

### Technical Problem

A primary object of the present invention is to provide a beneficial improvement in a method for producing a fiber-reinforced resin article having a substantially closed cavity, the method including: placing a reinforcing fiber preform in a mold together with a core formed of a wax and heating the reinforcing fiber preform to cure the preform.

In the present description, issues to be solved by each embodiment of the present invention may be disclosed explicitly or implicitly.

### Solution to Problem

Embodiments of the present invention include, but are not limited to, the following.
[1] A method for producing a fiber-reinforced resin article, the method including: a molding step of placing a reinforcing fiber preform in a mold together with a fusible core formed of wax and heating the reinforcing fiber preform in the mold to obtain a cured product of the reinforcing fiber preform; and a core removal step of removing the fusible core from the cured product, wherein the fusible core is formed of at least two types of waxes miscible with each other, and a difference in melting point between a wax having a highest melting point and a wax having a lowest melting point is 30°C or higher.
[2] The production method according to [1], wherein in the molding step, a prepreg preform formed of a prepreg impregnated with a thermosetting resin is placed, as the reinforcing fiber preform, in the mold together with the fusible core, and the prepreg preform is heated in the mold to obtain a cured product.
[3] The production method according to [1], wherein in the molding step, a dry fabric preform formed of a fabric not impregnated with a thermosetting resin is placed, as the reinforcing fiber preform, in the mold together with the fusible core, a thermosetting liquid resin is injected into the mold to form a resin-impregnated fabric, and the resin-impregnated fabric is heated in the mold to obtain a cured product.
[4] The production method according to any one of [1] to [3], wherein the highest melting point Tm (°C) among melting points of the waxes constituting the fusible core and a molding temperature Tf (°C) satisfy Tm ≥ Tf - 30.
[5] The production method according to any one of [1] to [4], wherein the highest melting point Tm (°C) among melting points of the waxes constituting the fusible core and a heating temperature Td (°C) during removal of the core satisfy Td ≥ Tm.
[6] The production method according to any one of [1] to [5], wherein the wax contains an organic compound having a polar group.
[7] The production method according to any one of [1] to [6], wherein the wax contains a fatty acid-based compound.
[8] The production method according to any one of [1] to [7], wherein the fusible core is substantially in contact with the reinforcing fiber preform.
[9] The production method according to any one of [1] to [8], wherein the fusible core includes a groove or a depression on a surface thereof.
[10] The production method according to any one of [1] to [9], wherein the fusible core includes a through hole.
[11] A fiber-reinforced resin article including a hollow structure portion obtained by molding a fusible core, wherein the hollow structure portion includes substantially no outer skin.
[12] A fiber-reinforced resin article including: a hollow structure portion in which a cavity is formed; and a support column that connects wall surfaces of the cavity to each other, wherein joint portions between the wall surfaces and the support column are integrated seamlessly.
[13] The fiber-reinforced resin article according to [12], wherein the support column is formed of a chopped fiber-reinforced resin.
[14] The fiber-reinforced resin article according to [12] or [13], wherein the support column has a length of from 5 to 100 mm and a minimum width of from 1 to 10 mm.
[15] The fiber-reinforced resin article according to any one of [12] to [14], including a partial joint portion where the wall surfaces are partially joined to each other in the cavity.
[16] The fiber-reinforced resin article according to [15], wherein the wall surfaces are at least partially joined, at the partial joint portion, to each other with an adhesive.
[17] The fiber-reinforced resin article according to any one of [11] to [16], containing a continuous fiber as a reinforcing fiber.
[18] The fiber-reinforced resin article according to any one of [11] to [16], containing a chopped fiber as a reinforcing fiber.
[19] The fiber-reinforced resin article according to [18], including a cured product of SMC.
[20] The fiber-reinforced resin article according to any one of [11] to [19], wherein a metal part is integrated with the fiber-reinforced resin article.
[21] A method for producing a fusible core, the method including: filling a mold with a moldable semi-solid or clay-like miscible wax obtained by changing temperatures of at least two types of waxes miscible with each other, wherein a difference in melting point between a wax having a highest melting point and a wax having a lowest melting point is 30°C or higher, to a temperature lower than the melting point of the wax having the highest melting point by from 5°C to 25°C; and then pressure-molding the semi-solid or clay-like miscible wax in the mold.
[22] The production method according to [21], wherein a temperature of the mold during the pressure molding is (T_{L} - 20)°C or higher and (T_{L} + 30)°C or lower, where T_{L} is the melting point of the wax having the lowest melting point.
[23] A method for producing a fusible core, the method including: filling a mold with solid wax crushed pieces obtained by pulverizing a solid miscible wax formed of at least two types of waxes miscible with each other, wherein a difference in melting point between a wax having a highest melting point and a wax having a lowest melting point is 30°C or higher; and then pressure-molding the solid wax crushed pieces in the mold.
[24] The production method according to [23], wherein a temperature of the mold during the pressure molding is T_{L}°C or higher and (T_{L} + 50)°C or lower, where T_{L} is the melting point of the wax having the lowest melting point.
[25] The production method according to [23] or [24], wherein the solid wax crushed pieces have an average particle size of from 0.5 to 5 mm.
[26] The production method according to any one of [21] to [25], wherein a pressure during the pressure molding is from 1 to 10 MPa.
[27] The production method according to any one of [21] to [26], wherein a material for the mold is aluminum.
[28] A method for producing a fusible core, the method including: charging, into a mold, solid wax crushed pieces obtained by pulverizing a solid miscible wax formed of at least two types of waxes miscible with each other, wherein a difference in melting point between a wax having a highest melting point and a wax having a lowest melting point is 30°C or higher; and casting and filling the wax having the same composition, which are heated and melted, into the mold, followed by cooling.
[29] The production method according to [28], wherein the solid wax crushed pieces have an average particle size of 5 mm or more.
[30] The production method according to [28] or [29], wherein a filling percentage of the solid wax crushed pieces, when filling the solid wax crushed pieces into the mold, is from 10 to 90 vol%.
[31] The production method according to any one of [28] to [30], wherein a material for the mold is aluminum.
[32] A fusible core formed of at least two types of waxes miscible with each other, wherein a difference in melting point between a wax having a highest melting point and a wax having a lowest melting point is 30°C or higher, and, when temperature drop data of the fusible core is measured by a differential scanning calorimeter (DSC), a peak temperature of a highest melting point component is lower than a melting point temperature of the wax having the highest melting point alone by 3°C or higher.

### Advantageous Effects of Invention

There is provided a beneficial improvement in a method for producing a fiber-reinforced resin article, the method including curing at least a reinforcing fiber preform, under pressure, with a core formed of a wax.

### Brief Description of Drawings

FIG. 1 is a flow diagram of a method for producing a fiber-reinforced resin article according to an embodiment.
FIG. 2 is a cross-sectional view showing a structure of a fusible core that can be used in the method for producing a fiber-reinforced resin article according to the embodiment.
FIG. 3 is a cross-sectional view showing a state where a reinforcing fiber preform is placed in a mold together with a fusible core wrapped inside the preform.
FIG. 4 is a cross-sectional view showing a state where a reinforcing fiber preform having a partial joint portion is placed in a mold together with a fusible core wrapped inside the preform.
FIG. 5 is a cross-sectional view showing a state where a reinforcing fiber preform having a partial joint portion is placed in a mold together with a fusible core wrapped inside the preform and an adhesive.
FIG. 6 is a cross-sectional view showing a state where a metal plate and a reinforcing fiber preform having a partial joint portion are placed in a mold together with a fusible core wrapped inside the preform.
FIG. 7 is a cross-sectional view showing a state where a reinforcing fiber preform having a partial joint portion is placed in a mold together with a fusible core wrapped inside the preform, and a groove is formed on the fusible core.
FIG. 8 is a cross-sectional view showing a state where a reinforcing fiber preform having a partial joint portion is placed in a mold together with a fusible core wrapped inside the preform, and a hole penetrating the fusible core is formed.
FIG. 9 is a cross-sectional view showing a fiber-reinforced resin article molded from the reinforcing fiber preform having the partial joint portion shown in FIG. 4.
FIG. 10 is a cross-sectional view showing a fiber-reinforced resin article molded from the reinforcing fiber preform having the partial joint portion shown in FIG. 5.
FIG. 11 is a cross-sectional view showing a fiber-reinforced resin article molded from the metal plate and the reinforcing fiber preform having the partial joint portion shown in FIG. 6.
FIG. 12 is a cross-sectional view showing a fiber-reinforced resin article molded from the reinforcing fiber preform having the partial joint portion and a protrusion shown in FIG. 7.
FIG. 13 is a cross-sectional view showing a fiber-reinforced resin article molded from the reinforcing fiber preform having the partial joint portion and a protrusion penetrating an inside of a cavity shown in FIG. 8.

### Description of Embodiments

### 1. Method for Producing Fiber-Reinforced Resin Article

One of embodiments of the present invention relates to a method for producing a fiber-reinforced resin article.

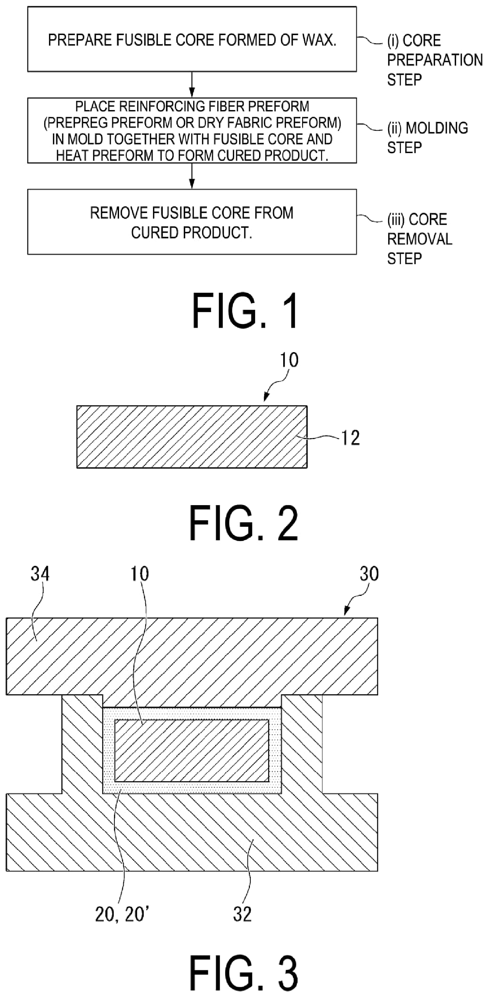

In the following description, a method for producing a fiber-reinforced resin article according to an example of the embodiment is divided into the following three steps as shown in the flow of FIG. 1 for convenience of description.
(i) A core preparation step of preparing a fusible core formed of a wax.
(ii) A molding step of placing a reinforcing fiber preform in a mold together with the fusible core and heating the preform in the mold to form a cured product.
(iii) A core removal step of removing the fusible core from the cured product.

The method for producing a fiber-reinforced resin article according to the embodiment is preferably used for production of a fiber-reinforced resin article having a structure composed of a bent or curved wall surface in at least a part thereof. Typical examples of the structure composed of a bent or curved wall surface include a hollow structure, a cylindrical structure, a structure having a U-shaped cross section, and a structure having an L-shaped cross section. Various undercut portions also often have a bent or curved wall surface in the structure.

Hereinafter, the respective steps will be described in detail.

### (1) Core Preparation Step

The core preparation step (i) is a step of preparing a fusible core formed of a wax.

The fusible core is formed of at least two types of waxes miscible with each other, and a difference in melting point between a wax having a highest melting point and a wax having a lowest melting point is 30°C or higher.

As an example, a case where the core is constituted by two component waxes will be described.

When the melting point of the low melting point wax is equal to or lower than a maximum temperature of the core during molding and the melting point of the high melting point wax is higher than the maximum temperature of the core during molding, the fusible core during molding is in a solid-liquid mixed state, that is, in a slurry state. If the core is in a slurry state during molding, the internal pressure becomes uniform because the core flows by pressure, and the possibility of the wax leaking from the mold is reduced because the core is not completely liquefied.

On the other hand, if the melting points of the two types of waxes are both higher than the maximum temperature of the core during molding, the internal pressure of the core will not be uniform because the fusible core during molding is solid, and defects in quality and appearance will tend to occur, which is not preferable. In addition, if the melting points of the two types of waxes are both equal to or lower than the maximum temperature of the core during molding, the fusible core is completely liquefied during molding, and the possibility of the liquefied wax leaking from the mold is increased, which is not preferable.

The "maximum temperature of the core during molding" is the highest temperature reached by the core surface during the heating and pressing molding in the mold.

A mass ratio of the low melting point wax to the high melting point wax in the fusible core is preferably from 1:10 to 10:1, more preferably from 1:5 to 5:1, and even more preferably from 1:3 to 3:1. The mass ratio is most preferably from 1:3 to 1:1. As the ratio of the low melting point wax is higher, it is easier to apply pressure to the reinforcing fiber preform during molding, to liquefy the fusible core and to remove the wax from the fiber-reinforced resin article. As the ratio of the high melting point wax is higher, it is easier to suppress leakage of the liquefied wax from the mold during molding.

When the core is discharged, the core can be discharged by heating the core to a temperature higher than the melting point of the high melting point wax, because the fusible core is completely liquefied.

The fusible core may be constituted by three or more component waxes, in addition to the two component waxes, i.e., the low melting point wax and the high melting point wax. In this case, a molding temperature is set to a temperature between the highest melting point and the lowest melting point, among the melting points of the respective waxes, whereby the fusible core during molding is in a slurry state.

A large difference between the highest melting point and the lowest melting point, among the melting points of the respective waxes, is suitable because the slurry state of the fusible core during molding can be maintained for a long time. The difference between the highest melting point and the lowest melting point among the melting points of the respective waxes is 30°C or higher, and preferably 50°C or higher.

The highest melting point Tm (°C) among the melting points of the waxes constituting the fusible core and the molding temperature Tf (°C) preferably satisfy Tm ≥ Tf - 30, and more preferably satisfy Tm ≥ Tf - 20. By satisfying this condition, it is easy to suppress leakage of the liquefied wax from the mold during molding.

The highest melting point Tm (°C) among the melting points of the waxes constituting the fusible core and a heating temperature Td (°C) during removal of the core preferably satisfy Td ≥ Tm, and more preferably satisfy Td ≥ Tm + 5. By satisfying this condition, the fusible core can be liquefied and the wax can be removed from the fiber-reinforced resin article.

The wax used in the fusible core preferably contains an organic compound having a polar group. This is because the viscosity tends to be relatively low when the core is melted and discharged. Examples of the "polar group" include a carboxy group and a hydroxyl group, and a carboxy group is preferable.

The wax used in the fusible core is preferably a fatty acid-based compound. A fatty acid ester-based compound has a relatively low melting point, a fatty acid amide-based compound has a relatively high melting point, and a combination of the fatty acid ester-based compound and the fatty acid amide-based compound is preferable because they are well miscible with each other.

Specifically, stearic acid is preferable as an aliphatic compound, and stearic acid ester is preferable as the fatty acid ester-based compound.

As the fatty acid amide-based compound, for example, stearic acid amide and oleic acid amide are preferable.

The combination of waxes used in the fusible core is preferably a combination of stearic acid ester and stearic acid amide, or a combination of stearic acid ester and oleic acid amide.

When at least two types of waxes are miscible with each other, the following condition is satisfied.

Condition: A peak temperature of a highest melting point component is lower than a peak temperature of a wax having a highest melting point alone by 3°C or higher, when temperature drop data of a molten mixture of the at least two types of waxes is measured by a differential scanning calorimeter (DSC).

As described herein, embodiments of the present invention include a fusible core formed of at least two types of waxes miscible with each other, wherein a difference in melting point between a wax having a highest melting point and a wax having a lowest melting point is 30°C or higher, and, when temperature drop data of the fusible core is measured by a differential scanning calorimeter (DSC), a peak temperature of a highest melting point component is lower than a melting point temperature of the wax having the highest melting point alone by 3°C or higher.

For example, in the case of molding a fiber-reinforced resin article having a hollow structure portion, a fusible core having substantially the same shape as the shape of the cavity in the hollow structure portion is prepared. Therefore, when the fiber-reinforced resin article to be molded is, for example, a hollow rectangular parallelepiped, a fusible core having a rectangular parallelepiped shape is prepared.

Hereinafter, a structure that the fusible core prepared in the core preparation step may have will be described by taking a case where the shape of the fusible core is a rectangular parallelepiped as an example.

FIG. 2 is a cross-sectional view of a fusible core 10 having a rectangular parallelepiped shape, and the fusible core 10 has a portion 12 formed of wax.

The fusible core 10 shown in FIG. 2 can be fabricated by molding, but is not limited thereto, and may be fabricated by, for example, cutting. Alternatively, the fusible core 10 may be fabricated by stacking a plurality of rectangular plates. In the case of a method of stacking a plurality of plates, the plates may be fused to each other by heating, but such fusion is not essential.

Hereinafter, several examples of the method for producing a fusible core will be described, but the method for producing a fusible core is not limited to the following examples.

A fusible core may be obtained by filling a mold with a moldable semi-solid or clay-like miscible wax obtained by changing temperatures of at least two types of waxes miscible with each other, wherein a difference in melting point between a wax having a highest melting point and a wax having a lowest melting point is 30°C or higher, to a temperature lower than the melting point of the wax having the highest melting point by from 5°C to 25°C; and then pressure-molding the semi-solid or clay-like miscible wax in the mold.

The "semi-solid" state is a state that has both properties of a liquid and a solid, has viscosity, and is freely deformable. The "viscous" state is a state that is more viscous than the semi-solid state and has no fluidity, but is freely deformed.

The temperatures of the at least two types of waxes miscible with each other are changed to a temperature lower than the melting point of the wax having the highest melting point by from 5°C to 25°C, thereby obtaining a moldable semi-solid or clay-like miscible wax. In the fusible core obtained by pressure-molding the semi-solid or clay-like miscible wax in the mold, porous defects are less likely to occur, and homogeneity is improved. When pores are generated in the fusible core, a molding material such as a resin flows into the pores during the production of the fiber-reinforced resin article, and as a result, the structure of the fiber-reinforced resin article may be different from the intended design. In contrast, a homogeneous fusible core with reduced porous defects contributes to proper performance development of the fiber-reinforced resin article. In addition, since it is not necessary to heat it to a liquid state, thermal deterioration can be reduced. As a result, repeated use of the wax of the fusible core has less impact on quality. In addition, it is expected that productivity is improved.

A temperature of the mold when the semi-solid or clay-like miscible wax is pressure-molded is preferably (T_{L} - 20)°C or higher and (T_{L} + 30)°C or lower. When the temperature is within the above numerical range, porous defects are less likely to occur in the fusible core.

Alternatively, the fusible core may be prepared by heating and molding solid wax crushed pieces in a mold. That is, the fusible core may be obtained by filling a mold with solid wax crushed pieces obtained by pulverizing a solid miscible wax formed of at least two types of waxes miscible with each other, wherein a difference in melting point between a wax having a highest melting point and a wax having a lowest melting point is 30°C or higher; and then pressure-molding the solid wax crushed pieces in the mold.

Also in the fusible core obtained by pressure-molding solid wax crushed pieces obtained by pulverizing a solid miscible wax in a mold, porous defects are less likely to occur, and homogeneity is improved. A homogeneous fusible core with reduced porous defects contributes to proper performance development of the fiber-reinforced resin article. In addition, since it is not necessary to heat it to a liquid state, thermal deterioration can be reduced. As a result, repeated use of the wax of the fusible core has less impact on quality. In addition, it is expected that productivity is improved.

A temperature of the mold when the solid wax crushed pieces are pressure-molded in the mold is preferably T_{L}°C or higher and (T_{L} + 50)°C or lower. When the temperature is within the above numerical range, porous defects are less likely to occur in the fusible core. T_{L} is the melting point of the wax having the lowest melting point.

An average particle size of the solid wax crushed pieces obtained by pulverizing the solid miscible wax is preferably from 0.5 to 5 mm. When the average particle size of the wax crushed pieces is within the above numerical range, porous defects are less likely to occur in the fusible core. The average particle size of the wax crushed pieces is determined by extracting 30 particles having diameters substantially close to a maximum diameter of each powder or crushed pieces, measuring the total weight of the particles, and calculating the diameter of a sphere having the same volume as the average particle size from the average weight with the specific gravity of 1. However, powder or crushed pieces having extremely uneven particle sizes are excluded from the calculation of the average particle size.

Alternatively, the fusible core may be prepared by casting and molding solid wax crushed pieces and the heated and melted wax in a mold. That is, the fusible core may be obtained by charging, into a mold, solid wax crushed pieces obtained by pulverizing a solid miscible wax formed of at least two types of waxes miscible with each other, wherein a difference in melting point between a wax having a highest melting point and a wax having a lowest melting point is 30°C or higher; and casting and filling the wax having the same composition, which are heated and melted, into the mold, followed by cooling.

Also in the fusible core obtained by casting and molding the solid wax crushed pieces and the heated and melted wax in the mold, porous defects are less likely to occur, and homogeneity is improved. A homogeneous fusible core with reduced porous defects contributes to proper performance development of the fiber-reinforced resin article. Since the mold for casting is not pressurized, a resin mold can also be used in addition to a metal mold.

When the solid wax crushed pieces and the heated and melted wax are cast and molded in the mold, the average particle size of the solid wax crushed pieces is preferably 5 mm or more. The upper limit value is not particularly limited, and wax crushed pieces having a size that fits in the mold may be used.

In the case of casting and molding the solid wax crushed pieces and the heated and melted wax in the mold, a filling percentage of the solid wax crushed pieces, when filling the solid wax crushed pieces into the mold, is preferably from 10 to 90 vol%. When the filling percentage is within the above numerical range, porous defects are less likely to occur in the fusible core.

In the method for producing a fusible core described above, a pressure during the pressure molding is preferably from 1 to 10 MPa. When the pressure is within the above numerical range, porous defects are less likely to occur in the fusible core.

The material for the mold or metal mold for obtaining the fusible core is not particularly limited, but aluminum is preferable. However, by appropriately considering temperature conditions and pressure conditions, a suitable fusible core can be obtained using a mold made of various materials in addition to aluminum.

### (2) Molding Step

The molding step (ii) is a step of placing a reinforcing fiber preform in a mold together with the fusible core and heating the preform to form a cured product (fiber-reinforced resin article).

In the molding step (ii), the fusible core is substantially in contact with the reinforcing fiber preform. The expression "the fusible core is substantially in contact with the reinforcing fiber preform" means that the fusible core may include a portion that is partially separated from the reinforcing fiber preform.

### Reinforcing Fiber Preform

The reinforcing fiber preform has two forms, i.e., a prepreg preform in which reinforcing fibers are impregnated with an uncured resin and a dry fabric preform in which reinforcing fibers are not impregnated with an uncured resin.

Hereinafter, the respective preforms will be described in detail.

### 1. Prepreg Preform

A prepreg is a composite of a fiber reinforcement impregnated with an uncured thermosetting resin composition, which is used as an intermediate material in the production of structures containing a fiber-reinforced resin (FRP).

There are various forms of the fiber reinforcement in the prepreg, such as continuous fiber, chopped fiber, woven fabric, nonwoven fabric, and non-crimp fabric.

A sheet-type prepreg having a plurality of continuous fiber bundles arranged in parallel as a fiber reinforcement is called a unidirectional prepreg (UD prepreg).

A prepreg using a woven fabric formed of a continuous fiber bundle as a fiber reinforcement is called a cloth prepreg.

A prepreg using a mat formed by depositing chopped fiber bundles as a fiber reinforcement is called SMC. SMC is preferred because it is easily deformed into a complicated structure.

A prepreg using a single continuous fiber bundle as a reinforcement is called a tow prepreg.

Examples of the fiber used in the prepreg include carbon fiber, glass fiber, aramid fiber, silicon carbide fiber, and metal fiber. One of the fibers may be used alone or two or more thereof may be used in combination.

Examples of the thermosetting resin used in the prepreg include epoxy resin, urea resin, vinyl ester resin (also referred to as epoxy acrylate resin), unsaturated polyester, polyurethane, and phenol resin. One of the thermosetting resins may be used alone or two or more thereof may be used in combination.

Various additives may be added to the thermosetting resin composition. Examples thereof include a reactive diluent, a flame retardant, an antifoaming agent, a defoaming agent, a mold release agent, a particulate filler, a colorant, and a silane coupling agent.

A content of the thermosetting resin composition in the prepreg is not limited, but is, for example, from 15 to 60 mass%. The content may be from 15 to 20 mass%, from 20 to 25 mass%, from 25 to 40 mass%, from 40 to 50 mass%, from 50 to 60 mass%, or the like.

The prepreg preform is made by processing one or more prepreg sheets in advance outside the mold so as to have a near net shape, that is, a shape substantially the same as that of the target fiber-reinforced resin article.

For example, when a fiber-reinforced resin article having a hollow structure portion is molded, it is preferable to make a prepreg preform so as to be in a state of wrapping a fusible core inside from the beginning.

The prepreg preform may include a structure in which prepreg sheets of the same type are laminated, or may include a structure in which two or more different types of prepreg sheets are laminated.

In one example, the prepreg preform may include a structure in which a prepreg using a continuous fiber bundle such as a unidirectional prepreg or a cloth prepreg and an SMC are laminated. Further, a prepreg sheet impregnated with a resin and a fabric not impregnated with a resin may be laminated.

In addition, the prepreg preform may include a structure in which a metal plate and a prepreg sheet are laminated. Examples of a material for the metal plate include materials containing alloys of iron, aluminum, magnesium, titanium, copper, nickel, and the like.

The prepreg preform may also include a structure in which a cured fiber composite material board and a prepreg sheet are laminated.

Before the prepreg preform is placed in the mold, the mold is preferably already heated to the same temperature as the molding temperature.

The molding temperature is usually within a range of from 120°C to 180°C, and is preferably 130°C or higher. The higher the molding temperature, the shorter the time required for molding.

After the prepreg preform is placed in the mold together with the fusible core, the mold is clamped.

FIG. 3 is a cross-sectional view showing a state where a prepreg preform 20 is placed in a mold 30 formed of a lower mold 32 and an upper mold 34 together with a fusible core 10 wrapped inside the prepreg preform 20 to mold a hollow rectangular parallelepiped fiber-reinforced resin article. The detailed structure of the fusible core 10 is not shown.

In the molding step, the fusible core 10 absorbs heat transmitted from the mold 30 via the prepreg preform 20 and expands, and the prepreg preform 20 is pressed against an inner surface of the mold 30. In other words, the internal pressure generated by the fusible core 10 attempting to expand against a clamping force of the mold 30 is applied to the prepreg preform 20.

Immediately after the mold clamping, the volume of the fusible core 10 is only moderately increased by thermal expansion, and the pressure applied to the prepreg preform 20 is weak. When a phase transition to a slurry state, that is, a solid-liquid phase starts to occur in a part of the wax constituting the fusible core 10, the pressure applied to the prepreg preform 20 rapidly increases.

By setting the molding temperature (the temperature of the mold during molding) so that the wax softens in a slurry form on the surface of the fusible core 10, the prepreg preform 20 can be sufficiently pressurized. Since the slurrying of the wax is caused by melting of the low melting point component, it is accompanied by a large volume expansion.

It is undesirable for all of the components of the wax to melt to a liquid state during the molding step. This is because the wax that has melted and flowed into a gap between the prepreg preform and the mold does not contribute to the pressurization of the prepreg preform. Preferably, the molding temperature is set so that the high melting point wax does not melt to a liquid state on the surface of the fusible core 10 until the molding step is completed.

If the fusible core is in a slurry form during molding of the prepreg preform, the fusible core can be used without an outer skin, but an outer skin can be placed on an outer periphery of the fusible core to smooth the inner surface of the prepreg preform that the fusible core contacts and to prevent the wax from flowing into a gap between the prepregs. The outer skin is sometimes referred to as a barrier layer.

Preferred materials for the outer skin are organic materials, particularly preferably polymers. Specific examples thereof include synthetic polymers such as polyolefin, polyamide, polyester, polyurethane, acryl, silicone, fluororubber, polyvinyl alcohol, and ethylene vinyl alcohol, and further include elastomers formed of these polymers.

A thickness of the outer skin is not particularly limited as long as the purpose as a seal for preventing the leakage of the melted wax is achieved. In one example, the thickness is, for example, from 0.05 to 1 mm, and may be 0.5 mm or less, and further 0.1 mm or less.

In the molding step, it is preferable to preheat the fusible core 10 before the molding step (ii) so that the temperature of the surface of the fusible core 10 approaches the molding temperature in a short time after the mold clamping.

This preheating must be carried out so that the wax does not soften to be in a slurry form. This is because, if the fusible core 10 expands greatly in the preheating stage, the prepreg preform 20 cannot be pressurized by utilizing the expansion of the fusible core 10 in the molding step.

In the case of a fiber-reinforced resin article having a large flat surface portion or a fiber-reinforced resin article required to have high rigidity of the flat surface portion, it is preferable to provide a protrusion such as a rib, a boss-shaped or surface-shaped partial joint portion.

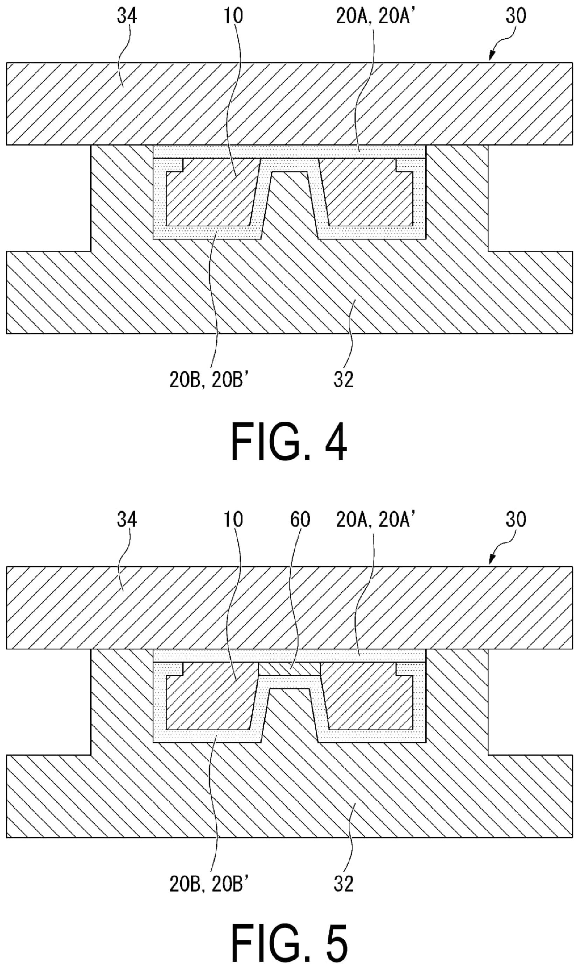

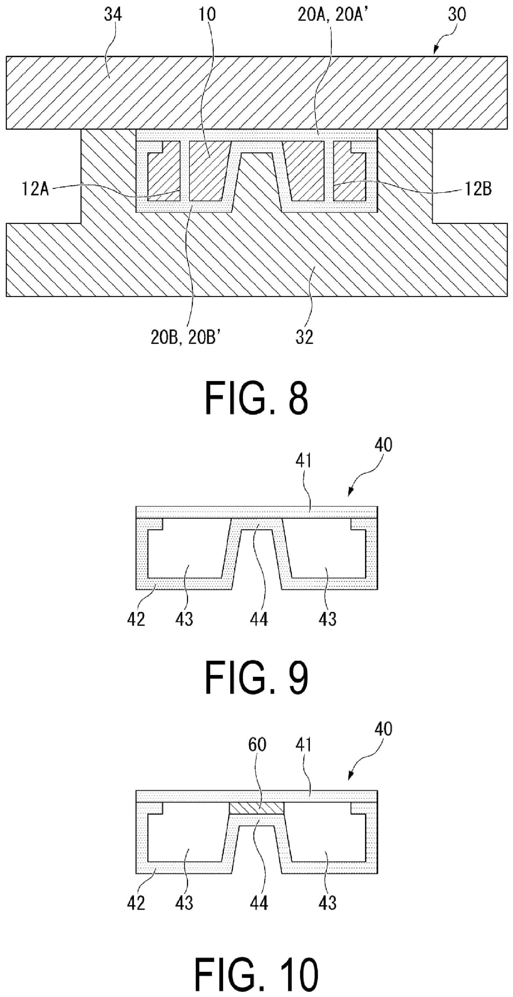

For example, as shown in FIG. 4, a prepreg preform 20 including a flat upper layer 20A and a lower layer 20B that is partially bent in a trapezoidal convex shape toward the upper layer 20A and has a tip surface of the convex portion in contact with the upper layer 20A is made in a state of wrapping the fusible core 10 inside, and the prepreg preform 20 is placed in a mold 30 and cured. A lower mold 32 of the mold 30 is provided with a convex portion having a shape along a trapezoidal bent portion of the lower layer 20B. In this case, as shown in FIG. 9, a fiber-reinforced resin article 40 obtained after curing has a partial joint portion 44 in which the wall surfaces are partially joined to each other in a cavity 43 so that an upper surface portion 41 is supported by a lower surface portion 42 bent in a convex shape.

In the molding of the fiber-reinforced resin article 40 of the example shown in FIG. 9, the fusible core 10 is not present between the upper layer 20A and the lower layer 20B at a portion where the partial joint portion 44 is formed in the prepreg preform 20, and the expansion pressure of the fusible core 10 cannot be used. Therefore, in the partial joint portion 44 of the fiber-reinforced resin article 40, there is a possibility that a poor appearance or a void due to delamination or the like may occur.

In contrast, as in the example shown in FIG. 5, the upper layer 20A and the lower layer 20B of the prepreg preform 20 are joined by an adhesive 60 at the portion where the partial joint portion 44 is formed, and thus it is possible to suppress molding failure at the partial joint portion 44 of the fiber-reinforced resin article 40. In this case, as shown in FIG. 10, the obtained fiber-reinforced resin article 40 has the partial joint portion 44 in which the wall surfaces are partially joined to each other in the cavity 43, and the wall surfaces of the partial joint portion 44 are joined to each other by the adhesive 60.

When a foamed adhesive is used as the adhesive 60, the foamed adhesive is cured while expanding during molding, and thus the joint strength of the partial joint portion 44 is increased, which is more preferable.

The expansion pressure of the fusible core cannot be used during molding in the partial joint portion of the fiber-reinforced resin article where the upper surface portion is supported by the convex-shaped lower surface portion, also in the case where the partial joint portion is present at an end portion of the upper surface portion in the surface direction. Also in this case, a joining portion of the upper layer 20A and the lower layer 20B of the prepreg preform 20 can be joined with an adhesive during the molding.

In the example shown in FIG. 4, at end portions in the surface direction of the upper layer 20A of the prepreg preform 20, end portions of the lower layer 20B are bent toward the center side in the surface direction, and upper surfaces of the bent portions of the lower layer 20B are in contact with the upper layer 20A. In the joining portions between the bent portions of the lower layer 20B and the upper layer 20A, the expansion pressure of the fusible core 10 can be used during molding, but these joining portions may also be joined using an adhesive.

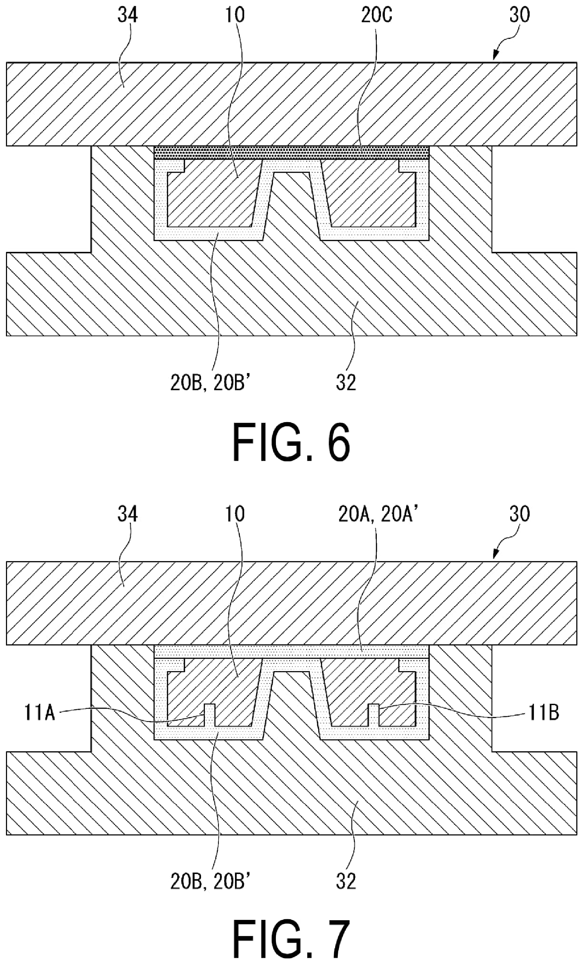

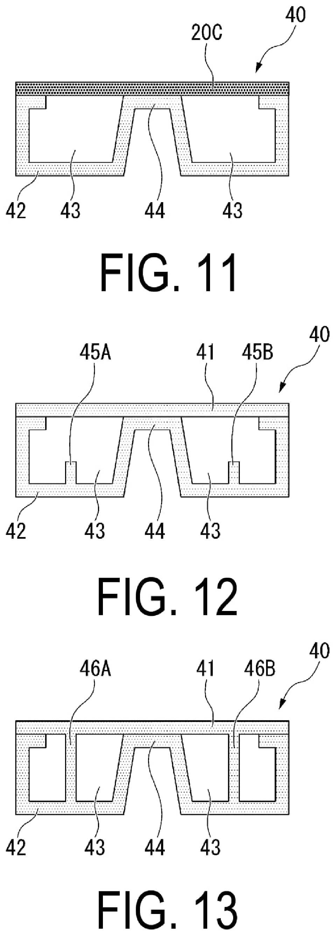

As in the example shown in FIG. 6, the upper layer 20A of the prepreg preform 20 may be replaced with a metal plate 20C. In this case, as shown in FIG. 11, a fiber-reinforced resin article 40 is obtained in which the lower surface portion 42, which is a cured product of the lower layer 20B of the prepreg preform 20, and the metal plate 20C are joined. If the metal plate 20C is thin, for example, has a thickness of 1 mm or less, the expansion pressure of the fusible core can simultaneously cause the metal plate to be bent at an angle.

In the prepreg preform, an adhesive can be used in the joining portion between the cured product and the metal plate, as in the joining between the cured products, and a foamed adhesive is preferably used.

As another example of the fiber-reinforced resin article having a large flat surface portion or the fiber-reinforced resin article required to have high rigidity of the flat surface portion, a fiber-reinforced resin article having a reinforcing structure of a protrusion such as a rib is preferable. That is, the fusible core preferably includes a groove or depression for forming a protrusion such as a rib on a surface thereof.

FIG. 7 is a cross-sectional view showing a state where the fusible core 10 wrapped inside the prepreg preform 20 has grooves 11A and 11B on a surface thereof. This example has the same structure as the example shown in FIG. 4 except that the fusible core 10 has the grooves 11A and 11B on a surface thereof.

In this example, after the mold clamping, the fusible core 10 absorbs heat transmitted from the mold 30 via the prepreg preform 20 and expands, and the prepreg preform 20 is pressed against the inner surface of the mold 30, and at the same time, an uncured resin of the prepreg preform 20 and further the reinforcing fibers partially enter the fusible core 10 so as to fill the grooves 11A and 11B of the fusible core 10. In this case, the fiber-reinforced resin article 40 obtained after the curing has ribs 45A and 45B for improving rigidity on the wall surface of the lower surface portion 42 on the cavity 43 side as shown in FIG. 12.

FIG. 8 is a cross-sectional view showing a state where the fusible core 10 the fusible core 10 wrapped inside the prepreg preform 20 has through holes 12A and 12B. This example has the same structure as the example shown in FIG. 4 except that the fusible core 10 has the through holes 12A and 12B.

In this example, after the mold clamping, the fusible core 10 absorbs heat transmitted from the mold 30 via the prepreg preform 20 and expands, and the prepreg preform 20 is pressed against the inner surface of the mold 30, and at the same time, an uncured resin of the prepreg preform 20 and further the reinforcing fibers partially enter the fusible core 10 so as to fill the through holes 12A and 12B of the fusible core 10. In this case, as shown in FIG. 13, the fiber-reinforced resin article 40 obtained after the curing has, in the cavity 43, support columns 46A and 46B connecting the wall surfaces of the upper surface portion 41 and the lower surface portion 42. Joint portions between the wall surfaces of the upper surface portion 41 and the lower surface portion 42 and the support columns 46A and 46B are integrated seamlessly.

In such a fiber-reinforced resin article, the rigidity can be significantly improved by increasing the number of the support columns.

### 2. Dry Fabric Preform

The dry fabric preform is a preform in which a laminate obtained by laminating a plurality of reinforcing fiber materials in which a heat-fusible binder is placed on a surface of a fabric such as a woven fabric, a knitted fabric, a nonwoven fabric, or a non-crimp fabric is formed into a near net shape by utilizing heat fusion of a heat-fusible binder.

The dry fabric preform is placed in a mold, and a thermosetting liquid resin is injected into the mold to impregnate the reinforcing fiber material, by a method called resin transfer molding (hereinafter referred to as "RTM").

The fiber used in the dry fabric is, for example, carbon fiber, glass fiber, aramid fiber, silicon carbide fiber, or metal fiber. One of the fibers may be used alone or two or more thereof may be used in combination.

Examples of the thermosetting liquid resin used in the RTM method include epoxy resin, urea resin, vinyl ester resin (also referred to as epoxy acrylate resin), unsaturated polyester, polyurethane, and phenol resin.

Various additives may be added to the thermosetting liquid resin composition. Examples thereof include a reactive diluent, a flame retardant, an antifoaming agent, a defoaming agent, a mold release agent, a particulate filler, a colorant, and a silane coupling agent.

The dry fabric preform is usually made by processing two or more dry fabric sheets to a near net shape in advance outside the mold.

For example, when a fiber-reinforced resin article having a hollow structure portion is molded, it is preferable to make a dry fabric preform so as to be in a state of wrapping a fusible core inside from the beginning.

The dry fabric preform may include a structure in which dry fabric sheets of the same type are laminated, or may include a structure in which two or more different types of dry fabric sheets are laminated.

In one example, the dry fabric preform may include a structure in which dry fabrics using continuous fiber bundles such as a uniaxial or multiaxial non-crimp fabric and a cloth fabric are laminated.

The dry fabric preform may also include a structure in which a metal plate and a dry fabric sheet are laminated.

Examples of a material for the metal plate include materials containing alloys of iron, aluminum, magnesium, titanium, copper, nickel, and the like.

The dry fabric preform may also include a structure in which an already cured fiber composite material board and a dry fabric sheet are laminated.

Before the dry fabric preform is placed in the mold, the mold is preferably already heated to the same temperature as the molding temperature.

The molding temperature is usually within a range of from 120°C to 180°C, and is preferably 130°C or higher. The higher the molding temperature, the shorter the time required for molding.

After the dry fabric preform is placed in the mold together with the fusible core, the mold is closed and a thermosetting liquid resin is injected into the mold to form a resin-impregnated fabric.

FIG. 3 is a cross-sectional view showing a state where a dry fabric preform 20' is placed in a mold 30 formed of a lower mold 32 and an upper mold 34 together with a fusible core 10 wrapped inside the dry fabric preform 20' to mold a hollow rectangular parallelepiped fiber-reinforced resin article. The detailed structure of the fusible core 10 is not shown.

In the molding step, the fusible core 10 absorbs heat transmitted from the mold 30 via a resin-impregnated fabric to expand, and the resin-impregnated fabric is pressed against the inner surface of the mold 30. In other words, the internal pressure generated by the fusible core 10 attempting to expand against a clamping force of the mold 30 is applied to the resin-impregnated fabric.

After the mold clamping, a thermosetting liquid resin is injected into the mold 30 through a resin injection hole (not shown), whereby the dry fabric preform 20' becomes a resin-impregnated fabric, and a resin injection pressure is applied thereto. Further, when a phase transition to a slurry state, that is, a solid-liquid phase starts to occur in a part of the wax constituting the fusible core 10 with respect to the resin-impregnated fabric, the pressure applied to the resin-impregnated fabric rapidly increases.

By setting the molding temperature (the temperature of the mold during molding) so that the wax softens in a slurry form on the surface of the fusible core 10, the resin-impregnated fabric can be sufficiently pressurized. Since the slurrying of the wax is caused by melting of the low melting point component, it is accompanied by a large volume expansion.

It is undesirable for all of the components of the wax to melt to a liquid state during the molding step. This is because the wax that has melted and flowed into a gap between the resin-impregnated fabric and the mold does not contribute to the pressurization of the resin-impregnated fabric. Preferably, the molding temperature is set so that the high melting point wax does not melt to a liquid state on the surface of the fusible core 10 until the molding step is completed.

If the fusible core is in a slurry form during molding of the resin-impregnated fabric, the fusible core can be used without an outer skin, but an outer skin can be placed on an outer periphery of the fusible core to smooth the inner surface of the resin-impregnated fabric that the fusible core contacts and to prevent the wax from flowing into the resin-impregnated fabric.

Preferred materials for the outer skin are organic materials, particularly preferably polymers. Specific examples thereof include synthetic polymers such as polyolefin, polyamide, polyester, polyurethane, acryl, silicone, fluororubber, polyvinyl alcohol, and ethylene vinyl alcohol, and further include elastomers formed of these polymers.

A thickness of the outer skin is not particularly limited as long as the purpose as a seal for preventing the leakage of the melted wax is achieved. In one example, the thickness is, for example, from 0.05 to 1 mm, and may be 0.5 mm or less, and further 0.1 mm or less.

It is preferable to preheat the fusible core 10 before the molding step (ii) so that the temperature of the surface of the fusible core 10 approaches the molding temperature in a short time after the mold clamping.

This preheating must be carried out so that the wax does not soften to be in a slurry form. This is because, if the fusible core 10 expands greatly in the preheating stage, the resin-impregnated fabric cannot be pressurized by utilizing the expansion of the fusible core 10 in the molding step.

In the case of a fiber-reinforced resin article having a large flat surface portion or a fiber-reinforced resin article required to have high rigidity of the flat surface portion, the fiber-reinforced resin article preferably has a protrusion such as a rib, a boss-shaped or surface-shaped partial joint portion.

For example, as shown in FIG. 4, a dry fabric preform 20' including a flat upper layer 20A' and a lower layer 20B' that is partially bent in a trapezoidal convex shape toward the upper layer 20A' and has a tip surface of the convex portion in contact with the upper layer 20A' is made in a state of wrapping the fusible core 10 inside, and the dry fabric preform 20' is placed in a mold 30 and cured. In the example shown in FIG. 4, at end portions, in the surface direction, of the upper layer 20A' of the dry fabric preform 20', end portions of the lower layer 20B' are bent toward the center side in the surface direction, and upper surfaces of the bent portions of the lower layer 20B' are in contact with the upper layer 20A'. A lower mold 32 of the mold 30 is provided with a convex portion having a shape along a trapezoidal bent portion of the lower layer 20B'.

In this case, as shown in FIG. 9, a fiber-reinforced resin article 40 obtained after curing has a partial joint portion 44 in which the wall surfaces are partially joined to each other in a cavity 43 so that an upper surface portion 41 is supported by a lower surface portion 42 bent in a convex shape.

In the RTM method, a space between the upper layer 20A' and the lower layer 20B' at a portion where the partial joint portion 44 is formed in the dry fabric preform 20' is filled with the injected thermosetting liquid resin, and therefore, an adhesive is not usually required.

As in the example shown in FIG. 6, the dry fabric preform 20' may be replaced with a metal plate 20C. In this case, as shown in FIG. 11, a fiber-reinforced resin article is obtained in which a cured product of the resin-impregnated fabric and the metal plate 20C are joined. If the metal plate 20C is thin, for example, has a thickness of 1 mm or less, the expansion pressure of the fusible core can simultaneously cause the metal plate to be bent at an angle.

As another example of the fiber-reinforced resin article having a large flat surface portion or the fiber-reinforced resin article required to have high rigidity of the flat surface portion, a fiber-reinforced resin article having a reinforcing structure of a protrusion such as a rib is preferable. That is, the fusible core preferably includes a groove or depression for forming a protrusion such as a rib on a surface thereof.

FIG. 7 is a cross-sectional view showing a state where the fusible core 10 wrapped inside the dry fabric preform 20' has grooves 11A and 11B on a surface thereof. This example has the same structure as the example shown in FIG. 4 except that the fusible core 10 has the grooves 11A and 11B on a surface thereof.

In this example, after the mold clamping and resin injection, the fusible core 10 absorbs heat transmitted from the mold 30 via the resin-impregnated fabric and expands, and the resin-impregnated fabric is pressed against the inner surface of the mold 30, and at the same time, an uncured resin of the resin-impregnated fabric and further the reinforcing fibers partially enter the fusible core 10 so as to fill the grooves 11A and 11B of the fusible core 10. The fiber-reinforced resin article 40 obtained after the curing has ribs 45A and 45B for improving rigidity on the wall surface of the lower surface portion 42 on the cavity 43 side as shown in FIG. 12.

FIG. 8 is a cross-sectional view showing a state where the fusible core 10 the fusible core 10 wrapped inside the dry fabric preform 20' has through holes 12A and 12B. This example has the same structure as the example shown in FIG. 4 except that the fusible core 10 has the through holes 12A and 12B.

In this example, after the mold clamping and resin injection, the fusible core 10 absorbs heat transmitted from the mold 30 via the resin-impregnated fabric and expands, and the resin-impregnated fabric is pressed against the inner surface of the mold 30, and at the same time, an uncured resin of the resin-impregnated fabric and further the reinforcing fibers partially enter the fusible core 10 so as to fill the through holes 12A and 12B of the fusible core 10. As shown in FIG. 13, the fiber-reinforced resin article 40 obtained after the curing has, in the cavity 43, support columns 46A and 46B connecting the wall surfaces of the upper surface portion 41 and the lower surface portion 42. Joint portions between the wall surfaces of the upper surface portion 41 and the lower surface portion 42 and the support columns 46A and 46B are integrated seamlessly.

In such a fiber-reinforced resin article, the rigidity can be significantly improved by increasing the number of the support columns.

### (3) Wax Removal Step

In the wax removal step (iii), the fusible core 10 is removed from the fiber-reinforced resin article obtained by curing the prepreg preform or the resin-impregnated fabric in the molding step (ii).

For example, in a case where the fiber-reinforced resin article has a closed cavity, the fiber-reinforced resin article is heated in an oven, for example, to melt the fusible core remaining inside the fiber-reinforced resin article, and the wax in a liquid state is discharged through a hole provided in the fiber-reinforced resin article using a drill or a hole saw. The heating during wax removal is desirably performed so that the fiber-reinforced resin article does not reach a heat deformation temperature (deflection temperature under load).

An opening area of the hole for discharging the wax in a liquid state is preferably from 10 to 500 mm². When the opening area of the hole is at least the above lower limit value, it is easy to shorten a discharge time of the wax. When the opening area of the hole is at most the above upper limit value, it is easy to suppress a decrease in strength of the fiber-reinforced resin article.

Even when the fiber-reinforced resin article has an undercut portion, the fusible core can be melted and removed as in the case where the fiber-reinforced resin article has a closed cavity. When the fiber-reinforced resin article does not have a closed cavity or an undercut portion, the fusible core may be able to be removed without melting.

### 2. Fiber-Reinforced Resin Article

One of other embodiments of the present invention relates to a fiber-reinforced resin article.

A fiber-reinforced resin article according to an example of the embodiment includes at least a portion formed of a fiber-reinforced resin and has a hollow structure portion in which a cavity is formed.

The cavity of the hollow structure portion is a substantially closed cavity. The "substantially closed cavity" is a cavity in which a proportion of the opening area to the area of a surface in which an opening communicating with the cavity is formed is small, and specifically refers to a cavity in which the opening proportion is 50% or less, preferably 30% or less.

Preferably, the fiber-reinforced resin article includes substantially no outer skin in the hollow structure portion. The "fiber-reinforced resin article having substantially no outer skin" is a fiber-reinforced resin article molded without having an outer skin on a fusible core. A fiber-reinforced resin article from which the outer skin is removed after molding is not encompassed in the fiber-reinforced resin article having substantially no outer skin.

There are various forms of the fiber reinforcement contained in the fiber-reinforced resin article, such as continuous fiber, chopped fiber, woven fabric, nonwoven fabric, and non-crimp fabric.

Examples of the fiber include carbon fiber, glass fiber, aramid fiber, silicon carbide fiber, and metal fiber. One of the fibers may be used alone or two or more thereof may be used in combination.

The fiber-reinforced resin article includes a cured product of a thermosetting resin.

Examples of the thermosetting resin include epoxy resin, urea resin, vinyl ester resin (also referred to as epoxy acrylate resin), unsaturated polyester, polyurethane, and phenol resin. One of the thermosetting resins may be used alone or two or more thereof may be used in combination.

A fiber-reinforced resin article according to another example of the embodiment includes a hollow structure portion in which a cavity is formed, and includes a partial joint portion where wall surfaces are partially joined to each other in the cavity. For example, the fiber-reinforced resin article 40 having the partial joint portion 44 in which the wall surfaces are partially joined to each other in the cavity 43 so that the upper surface portion is supported by the lower surface portion having a convex shape, as illustrated in FIG. 9, is exemplified.

A fiber-reinforced resin article according to another example of the embodiment includes a hollow structure portion in which a cavity is formed, and includes a partial joint portion where wall surfaces are partially joined to each other in the cavity, and the wall surfaces at the partial joint portion are joined to each other with an adhesive, preferably a foamed adhesive. For example, the fiber-reinforced resin article 40 in which the wall surfaces to be joined at the partial joint portion 44 are joined to each other with the adhesive 60, as illustrated in FIG. 10, is exemplified. When a foamed adhesive is used as the adhesive 60, the foamed adhesive is cured while expanding during molding, and thus the joint strength of the partial joint portion 44 is increased, which is more preferable.

In the fiber-reinforced resin article according to the embodiment, joint portions other than the partial joint portion where the wall surfaces are partially joined to each other in the cavity may also be joined with the adhesive. For example, as in the examples shown in FIGS. 9 and 10, joint portions between the bent portions at the end portions of the lower layer 20B and the upper layer 20A, at the end portions in the surface direction of the upper layer 20A of the prepreg preform 20, may also be joined with the adhesive. In this case, the adhesive is preferably a foamed adhesive.

A fiber-reinforced resin article according to another example of the embodiment includes a hollow structure portion in which a cavity is formed, and a metal part is integrated with the fiber-reinforced resin article. For example, the fiber-reinforced resin article 40 in which the lower surface portion 42, which is a cured product of a prepreg preform or a resin-impregnated fabric, and the metal plate 20C are joined, as illustrated in FIG. 11, is exemplified.

A fiber-reinforced resin article according to another example of the embodiment includes a hollow structure portion in which a cavity is formed, and a protrusion such as a rib or a boss provided on a wall surface of the cavity. For example, the fiber-reinforced resin article 40 having the ribs 45A and 45B, as illustrated in FIG. 12, is exemplified.

A fiber-reinforced resin article according to another example of the embodiment includes a hollow structure portion in which a cavity is formed, and a support column that connects wall surfaces of the cavity to each other, and joint portions between the wall surfaces and the support column are integrated seamlessly. For example, the fiber-reinforced resin article 40 having the support columns 46A and 46B, as illustrated in FIG. 13, is exemplified.

The support columns are preferably formed of a chopped fiber-reinforced resin, that is, a cured product of SMC. This is because SMC easily flows and is easily filled in the through holes of the fusible core during molding, and thus the support columns are easily formed.

The cross-sectional shape of the support columns is not particularly limited, and examples thereof include a circular shape, an elliptical shape, a square shape, a rectangular shape, and a triangular shape.

The support columns have a length of preferably from 5 to 100 mm, and more preferably from 10 to 50 mm. When the length of the support columns is at least the above lower limit value, the effect of reducing the weight is excellent. When the length of the support columns is at most the above upper limit value, the reinforcing effect of the support columns is stable.

The support columns have a minimum width of preferably from 1 to 10 mm, and more preferably from 2 to 5 mm. When the minimum width of the support columns is at least the above lower limit value, the reinforcing effect of the support columns is stable. When the minimum width of the support columns is at most the above upper limit value, the effect of reducing the weight of the fiber-reinforced resin article is excellent. The minimum width of the support columns is the shortest diameter because some distortion may occur even in the case of a circular shape, and is the minor diameter of an elliptical shape or the short side length of a rectangular shape.

The fiber-reinforced resin article and the method for producing the same described above can be preferably used for the production of various fiber-reinforced resin articles having a structure in which wall surfaces are partially joined to each other, in addition to the production of a rectangular parallelepiped article having a closed cavity as illustrated. The fiber-reinforced resin article referred to in the present invention includes, of course, an article formed only of FRP, but is not limited thereto, and also includes a fiber-reinforced resin article molded as a composite in combination with a part formed of a material other than FRP, such as a metal plate.

### 3. Experimental Results

The results of experiments conducted by the present inventors are described below.

### 3.1. Experiment 1

A fiber-reinforced resin article formed of FRP, having an outer size of 120 mm × 120 mm × 10 mm, and having a substantially closed cavity in which an upper surface portion and a lower surface portion were partially joined to each other at the central portion in the surface direction, as illustrated in FIG. 9, was made by the following procedure.

Two sheets of SMC (STR120N131 available from Mitsubishi Chemical Corporation) having a fiber content rate of 53 mass% and a thickness of about 2 mm, which was obtained by impregnating chopped carbon fiber mats with an epoxy acrylate resin, were cut into a predetermined shape, and one sheet was bent to form a lower layer of a prepreg preform having a near net shape with a convex portion at the central portion, and the other sheet was used as an upper layer of a prepreg preform having a flat shape.

A separately prepared fusible core having a square ring shape was placed inside the lower layer of the prepreg preform, and the upper layer of the prepreg preform was placed on the lower layer of the prepreg preform to prepare a prepreg preform.

The fusible core was made by heating and melting two components, i.e., a low melting point wax (fatty acid ester-based wax available from Itoh Oil Chemicals Co., Ltd., melting point: 50°C) and a high melting point wax (fatty acid amide-based wax available from Itoh Oil Chemicals Co., Ltd., melting point: 142°C) at a mixing ratio (mass ratio) of 1:2 to be miscible with each other; and cast-molding the miscible wax into a size just fitting inside the prepreg preform.

The prepreg preform thus made was placed together with the fusible core in a mold preheated to the same temperature as the molding temperature, and heated and cured. The molding temperature was 135°C, and the molding time was 10 minutes. The molding time referred to herein is a time from mold clamping to mold opening.

The molded article taken out from the mold was heated to 145°C in an oven to melt the wax forming the fusible core, and then a discharge hole having a diameter of 5 mm was formed in the molded article with a drill to discharge the wax.

The appearance and the cross section of the obtained fiber-reinforced resin article were good without voids due to peeling or the like.

### 3.2. Experiment 2

A fiber-reinforced resin article formed of FRP and a metal plate and having a substantially closed cavity was made in the same manner as in Experiment 1 except that the upper layer of the prepreg preform used was changed from SMC to a metal plate (SUS430) and that the thickness was changed to 0.4 mm.

The appearance and the cross section of the obtained fiber-reinforced resin article were good without voids due to peeling or the like.

### 3.3. Experiment 3

A fiber-reinforced resin article formed of FRP and having a substantially closed cavity was made in the same manner as in Experiment 1 except that a fusible core having a plurality of through holes each having a diameter of 2 mm and extending from the upper layer to the lower layer of the prepreg preform was used.

When the cross section of the obtained fiber-reinforced resin article was observed, SMC flowed into the through holes formed in the fusible core, and support columns supporting and reinforcing the wall surfaces of the cavity were formed. In addition, the appearance was good with no voids due to peeling or the like.

### 3.4. Experiment 4

As in Experiment 1, two components, i.e., a low melting point wax (melting point: 50°C) and a high melting point wax (melting point: 142°C), were mixed. These waxes were heated and melted to be miscible with each other, and then cooled and held at 135°C to obtain a clay-like miscible wax. The clay-like miscible wax was a solid that was deformable by its own weight. The clay-like miscible wax was charged into a mold at 50°C. The clay-like miscible wax was pressure-molded at 3 MPa in the mold to make a clay-like fusible core.

A fiber-reinforced resin article formed of FRP and having a substantially closed cavity was made in the same manner as in Experiment 1 except that the clay-like fusible core obtained in this manner was used. The appearance and the cross section of the obtained fiber-reinforced resin article were good without voids due to peeling or the like.

### 3.5. Experiment 5

As in Experiment 1, two components, i.e., a low melting point wax (melting point: 50°C) and a high melting point wax (melting point: 142°C), were mixed. These waxes were heated and melted to be miscible with each other, and then solidified by cooling. The solid miscible wax thus obtained was pulverized with a pulverizer to obtain solid wax crushed pieces. The average particle size of the solid wax crushed pieces was 1.5 mm. The solid wax crushed pieces were charged into a mold at 80°C. The solid wax crushed pieces were pressure-molded at 3 MPa in the mold to form a powdery fusible core.

A fiber-reinforced resin article formed of FRP and having a substantially closed cavity was made in the same manner as in Experiment 4 except that the powdery fusible core obtained in this manner was used. The appearance and the cross section of the obtained fiber-reinforced resin article were good without voids due to peeling or the like.

### 3.6. Experiment 6

As in Experiment 1, two components, i.e., a low melting point wax (melting point: 50°C) and a high melting point wax (melting point: 142°C), were mixed. These waxes were heated and melted to be miscible with each other, and then solidified by cooling. The solid miscible wax thus obtained was pulverized with a pulverizer to obtain solid wax crushed pieces. The solid wax crushed pieces were charged into the mold at a filling percentage of 60%. Separately, the same miscible wax was melted, and the melted miscible wax was poured into a mold to fill the mold, followed by cast molding, thereby making a fusible core.

A fiber-reinforced resin article formed of FRP and having a substantially closed cavity was made in the same manner as in Experiment 1 except that the fusible core obtained in this manner was used. The appearance and the cross section of the obtained fiber-reinforced resin article were good without voids due to peeling or the like.

### 3.7. Experiment 7

A fiber-reinforced resin article formed of FRP and having a substantially closed cavity was made in the same manner as in Experiment 1 except that only one component, i.e., a low melting point wax (fatty acid ester-based, melting point: 50°C) was used as the fusible core.

The obtained fiber-reinforced resin article had a defect of poor appearance due to the occurrence of the leakage of the wax.

### 3.8. Experiment 8

A fiber-reinforced resin article formed of FRP and having a substantially closed cavity was made in the same manner as in Experiment 1 except that only one component, i.e., a high melting point wax (fatty acid amide-based, melting point: 142°C) was used as the fusible core.

The obtained fiber-reinforced resin article had a relatively good appearance, but it was difficult to discharge the wax, and a hollow structure portion could not be formed.

The present invention has been described based on specific embodiments above. However, each embodiment has been presented as an example and does not limit the scope of the present invention. Each embodiment described in the present description can be modified in various ways without departing from the spirit of the invention and can be combined with a feature described by another embodiment within a practicable range.

### Industrial Applicability

The invention disclosed in the present description can be preferably used for the production of a fiber-reinforced resin article having a hollow structure and surface reinforcement.

The invention disclosed in the present description can be preferably used when producing, with a fiber-reinforced resin, parts (including structural parts) for automobiles, ships, railway vehicles, aircraft and other transportation equipment, and various sporting goods including bicycle frames, tennis rackets, and golf shafts, although not limited thereto.

### Reference Signs List

10 Fusible core
11A, 11B Groove
12 Wax
12A, 12B Through hole
20 Reinforcing fiber preform (prepreg preform)
20A Upper layer
20B Lower layer
20' Reinforcing fiber preform (dry fabric preform)
20A' Upper layer
20B' Lower layer
20C Metal plate
30 Mold
32 Lower mold
34 Upper mold
40 Fiber-reinforced resin article
41 Upper layer
42 Lower layer
43 Cavity
44 Partial joint portion
45A, 45B Rib
46A, 46B Support column
60 Adhesive

## Claims

1. A method for producing a fiber-reinforced resin article, the method comprising: a molding step of placing a reinforcing fiber preform in a mold together with a fusible core formed of wax and heating the reinforcing fiber preform in the mold to obtain a cured product of the reinforcing fiber preform; and a core removal step of removing the fusible core from the cured product,
wherein the fusible core is formed of at least two types of waxes miscible with each other, and a difference in melting point between a wax having a highest melting point and a wax having a lowest melting point is 30°C or higher.

2. The production method according to claim 1, wherein in the molding step, a prepreg preform formed of a prepreg impregnated with a thermosetting resin is placed, as the reinforcing fiber preform, in the mold together with the fusible core, and the prepreg preform is heated in the mold to obtain a cured product.

3. The production method according to claim 1, wherein in the molding step, a dry fabric preform formed of a fabric not impregnated with a thermosetting resin is placed, as the reinforcing fiber preform, in the mold together with the fusible core, a thermosetting liquid resin is injected into the mold to form a resin-impregnated fabric, and the resin-impregnated fabric is heated in the mold to obtain a cured product.

4. The production method according to claim 1, wherein the highest melting point Tm (°C) among melting points of the waxes constituting the fusible core and a molding temperature Tf (°C) satisfy Tm ≥ Tf - 30.

5. The production method according to claim 1, wherein the highest melting point Tm (°C) among melting points of the waxes constituting the fusible core and a heating temperature Td (°C) during removal of the core satisfy Td ≥ Tm.

6. The production method according to claim 1, wherein the wax contains an organic compound having a polar group.

7. The production method according to claim 1, wherein the wax contains a fatty acid-based compound.

8. The production method according to claim 1, wherein the fusible core is substantially in contact with the reinforcing fiber preform.

9. The production method according to claim 1, wherein the fusible core includes a groove or a depression on a surface thereof.

10. The production method according to claim 1, wherein the fusible core includes a through hole.

11. A fiber-reinforced resin article comprising a hollow structure portion obtained by molding a fusible core,
wherein the hollow structure portion includes substantially no outer skin.

12. A fiber-reinforced resin article comprising: a hollow structure portion in which a cavity is formed; and a support column that connects wall surfaces of the cavity to each other, wherein joint portions between the wall surfaces and the support column are integrated seamlessly.

13. The fiber-reinforced resin article according to claim 12, wherein the support column is formed of a chopped fiber-reinforced resin.

14. The fiber-reinforced resin article according to claim 12, wherein the support column has a length of from 5 to 100 mm and a minimum width of from 1 to 10 mm.

15. The fiber-reinforced resin article according to claim 12, comprising a partial joint portion where the wall surfaces are partially joined to each other in the cavity.

16. The fiber-reinforced resin article according to claim 15, wherein the wall surfaces are at least partially joined, at the partial joint portion, to each other with an adhesive.

17. The fiber-reinforced resin article according to claim 11 or 12, comprising a continuous fiber as a reinforcing fiber.

18. The fiber-reinforced resin article according to claim 11 or 12, comprising a chopped fiber as a reinforcing fiber.

19. The fiber-reinforced resin article according to claim 18, comprising a cured product of SMC.

20. The fiber-reinforced resin article according to claim 11 or 12, wherein a metal part is integrated with the fiber-reinforced resin article.

21. A method for producing a fusible core,
the method comprising: filling a mold with a moldable semi-solid or clay-like miscible wax obtained by changing temperatures of at least two types of waxes miscible with each other, wherein a difference in melting point between a wax having a highest melting point and a wax having a lowest melting point is 30°C or higher, to a temperature lower than the melting point of the wax having the highest melting point by from 5°C to 25°C; and then pressure-molding the semi-solid or clay-like miscible wax in the mold.

22. The production method according to claim 21, wherein a temperature of the mold during the pressure molding is (T_{L} - 20)°C or higher and (T_{L} + 30)°C or lower, where T_{L} is the melting point of the wax having the lowest melting point.

23. A method for producing a fusible core,
the method comprising: filling a mold with solid wax crushed pieces obtained by pulverizing a solid miscible waxy formed of at least two types of waxes miscible with each other, wherein a difference in melting point between a wax having a highest melting point and a wax having a lowest melting point is 30°C or higher; and then pressure-molding the solid wax crushed pieces in the mold.

24. The production method according to claim 23, wherein a temperature of the mold during the pressure molding is T_{L}°C or higher and (T_{L} + 50)°C or lower, where T_{L} is the melting point of the wax having the lowest melting point.

25. The production method according to claim 23, wherein the solid wax crushed pieces have an average particle size of from 0.5 to 5 mm.

26. The production method according to any one of claims 21 to 25, wherein a pressure during the pressure molding is from 1 to 10 MPa.

27. The production method according to any one of claims 21 to 25, wherein a material for the mold is aluminum.

28. A method for producing a fusible core,
the method comprising: charging, into a mold, solid wax crushed pieces obtained by pulverizing a solid miscible wax formed of at least two types of waxes miscible with each other, wherein a difference in melting point between a wax having a highest melting point and a wax having a lowest melting point is 30°C or higher; and casting and filling the wax having the same composition, which are heated and melted, into the mold, followed by cooling.

29. The production method according to claim 28, wherein the solid wax crushed pieces have an average particle size of 5 mm or more.

30. The production method according to claim 28, wherein a filling percentage of the solid wax crushed pieces, when filling the solid wax crushed pieces into the mold, is from 10 to 90 vol%.

31. The production method according to claim 28, wherein a material for the mold is aluminum.

32. A fusible core formed of at least two types of waxes miscible with each other,
wherein a difference in melting point between a wax having a highest melting point and a wax having a lowest melting point is 30°C or higher, and
when temperature drop data of the fusible core is measured by a differential scanning calorimeter (DSC), a peak temperature of a highest melting point component is lower than a melting point temperature of the wax having the highest melting point alone by 3°C or higher.
